# EUROPÄISCHE PATENTSCHRIFT

(11) **EP 2 784 379 B1**
(45) Veröffentlichungstag und Bekanntmachung des Hinweises auf die Patenterteilung: **19.08.2020**
(21) Anmeldenummer: 13193984.5
(22) Anmeldetag: 22.11.2013
(51) Int. Cl.: F21V 8/00, F21S 43/14, F21S 43/239, F21S 43/243, F21S 43/247

(54) **Lichtleiter mit einer bandförmigen Lichtaustrittsfläche**
Light guide with a strip-like light emitting surface
Conducteur lumineux doté d'une surface de sortie de lumière en forme de bande

(30) Priorität: 20.12.2012 DE 102012224079
(43) Veröffentlichungstag der Anmeldung: 01.10.2014
(73) Patentinhaber: Automotive Lighting Reutlingen GmbH, 72762 Reutlingen (DE)
(72) Erfinder: Gebauer, Matthias, 72770 Reutlingen (DE)
(74) Vertreter: DREISS Patentanwälte PartG mbB

(56) Entgegenhaltungen:
- EP-A1- 1 881 265
- EP-A1- 2 270 389
- EP-A2- 1 674 789
- EP-A2- 1 684 002
- FR-A1- 2 841 967
- US-A1- 2006 171 159

## Beschreibung

Die vorliegende Erfindung betrifft einen Lichtleiter nach dem Oberbegriff des Anspruchs 1. Ein solcher Lichtleiter ist aus der EP 1 674 789 A2 und auch aus der US 2006/0171159 A1 bekannt und weist unter anderem eine Einkoppeloptik auf, die dazu eingerichtet ist, divergent auf sie einfallendes Licht so in das Innere des Lichtleiters einzukoppeln, dass sich das eingekoppelte Licht im Inneren des Lichtleiters in zu einer ersten Ebene parallelen Ebenen und in zweiten Ebenen ausbreitet, wobei jede zweite Ebene von einer Normalen der ersten Ebene und einer in der ersten Ebene liegenden Geraden aufgespannt wird.

Dabei wird unter einer Divergenz ein Auseinanderlaufen von Lichtstrahlen verstanden. Ein divergentes Bündel ist in diesem Sinne ein Lichtbündel, das einen von Null abweichenden Öffnungswinkel besitzt. Einem parallelen Lichtbündel könnte man dagegen einen Öffnungswinkel gleich Null zuordnen.

Aus der DE 199 25 363 A1 ist ein plattenförmiger Lichtleiter bekannt, der ausgedehnte, parallel zueinander liegende Grenzflächen und schmale Seitenflächen besitzt, welche die plattenförmigen Grenzflächen miteinander verbinden.

Die ersten Ebenen liegen parallel zu den ausgedehnten Grenzflächen, die man auch als Breitseiten des plattenförmigen Lichtleiters bezeichnen könnte. Die zweiten Flächen liegen senkrecht dazu so im Lichtleiter, dass im Lichtleiter verlaufende Lichtstrahlen gewissermaßen innerhalb von solchen zweiten Flächen liegen. Es sind also imaginäre Flächen, deren Lage durch die Richtung der Lichtstrahlen im Lichtleiter definiert wird. Die bandförmige Lichtaustrittsfläche liegt in einer Schmalseite des bekannten plattenförmig-flächigen Lichtleiters.

Um eine parallele Lichtausbreitung im Lichtleiter in der zur Lichtaustrittsfläche weisenden Richtung zu erzielen, sieht der bekannte Gegenstand vor, dass die der bandförmigen Lichtaustrittsseite gegenüberliegende Schmalseite des plattenförmigen Lichtleiters als Reflektor ausgestaltet ist, der in den ersten Ebenen, also in den zu den ausgedehnten Plattenflächen parallelen Ebenen parabelförmige Konturen besitzt, und der senkrecht dazu eine prismenartige Kontur besitzt, welche einfallendes Licht zweimal umlenkt. Im Ergebnis lenkt der Reflektor das divergent auf ihn einfallende Licht damit als paralleles Licht auf die dem Reflektor gegenüber liegende bandförmige Lichtaustrittsfläche.

Ein großer Nachteil dieses Lichtleiters besteht darin, dass direkt in den der Lichtaustrittsfläche zugewandten Halbraum radial abgestrahltes Licht nicht auf den Reflektor trifft und daher nicht parallelisiert wird. Für eine Verwendung in Beleuchtungseinrichtungen von Kraftfahrzeugen, sei es für Scheinwerferlichtfunktionen oder für Signallichtfunktionen, wird jedoch eine möglichst paralleles Licht abgebende und möglichst homogen (gleichmäßig hell) leuchtende Lichtaustrittsfläche gewünscht. Solches Licht hat z.B. den Vorteil dass es sich durch nachfolgende Optiken besonders einfach in regelkonforme Lichtverteilungen verteilen lässt. Aus gestalterischen Gesichtspunkten wird darüber hinaus ein Lichtleiter gewünscht, der eine bandförmige Lichtaustrittsfläche mit einem großem Verhältnis der Länge der Lichtaustrittsfläche zu ihrer Breite besitzt und diese Anforderungen (Homogenität, Parallelität) erfüllt.

Diese Aufgabe wird mit den Merkmalen des Anspruchs 1 gelöst. Die vorliegende Erfindung unterscheidet sich von dem eingangs genannten Stand der Technik durch die kennzeichnenden Merkmale des Anspruchs.

Durch diese Merkmale wird im Idealfall eine Parallelisierung des Lichtes in zwei zu einander senkrechten Ebenen erreicht. Dabei wird die Parallelisierung in der einen Ebene räumlich getrennt von der Parallelisierung für die andere Ebene durchgeführt.

Mit der ersten Parallelisierung, die in der Einkoppeloptik erfolgt, wird die Lichtausbreitung in den zweiten Ebenen parallelisiert. Dabei erfolgt gleichzeitig eine Vorkonditionierung des Lichtes für den zweiten Parallelisierungsschritt, in dem die Lichtausbreitung in den ersten Ebenen parallelisiert wird. Dies erfolgt so, dass der zweite Parallelisierungsschritt die Ergebnisse des ersten Parallelisierungsschritts nicht beeinträchtigt. Dadurch, dass die erste Umlenkfläche zwischen der Einkoppeloptik und der Lichtaustrittsfläche liegt, kann das dort propagierende Licht, das von der Einkoppeloptik in den der Lichtaustrittsfläche zugewandten Abschnitt des Lichtleiters ausgeht, in seiner Richtung beeinflusst werden. Die um einen Winkel, der mindestens so groß ist wie das Produkt aus dem Wert des Grenzwinkels der Totalreflexion und dem Faktor 2 erfolgende Umlenkung dieses Lichtes erlaubt es, sämtliches auf die erste Umlenkfläche einfallendes Licht ohne Abschattungsverluste auf die weiteren Umlenkflächen umzulenken. Die auf diese Weise von der ersten Umlenkfläche beleuchteten weiteren Umlenkflächen erlauben es, das dort einfallende Licht ohne Abschattungsverluste in eine für die weiteren Umlenkflächen gemeinsame Vorzugsrichtung umzulenken. Durch die gemeinsame Vorzugsrichtung wird so ein Lichtstrom aus parallel propagierendem Licht innerhalb des Lichtleiters aus dem divergent eingekoppelten Licht erzeugt. Wenn eine vollständige Parallelausrichtung (Öffnungswinkels gleich Null) dabei unter Umständen auch nicht erreicht wird, so wird doch zumindest eine gute Näherung in Form einer starken Verringerung der Divergenz der Lichtausbreitung in diesen Richtungen erzielt.

Eine bevorzugte Ausgestaltung zeichnet sich dadurch aus, dass die Einkoppeloptik einen ersten Reflektor aufweist, der in den zweiten Ebenen die Form einer Parabel aufweist, deren Brennpunkt im scheinbaren Ursprung des divergenten Lichtbündels der Lichtquelle liegt.

Bevorzugt ist auch, dass der erste Reflektor als rotationssymmetrische Vertiefung in einer der Lichteintrittsfläche gegenüber liegenden Grenzfläche des Lichtleiters verwirklicht ist.

Ferner ist bevorzugt, dass die Tiefe der Vertiefung einem Wert zwischen 40% und 60% des am Ort der Vertiefung bei nicht vorhandener Vertiefung herrschenden Abstandes zwischen der Grenzfläche, in der die Lichteintrittsfläche liegt und der der Lichteintrittsfläche gegenüberliegenden Grenzfläche des Lichtleiters entspricht.

Bevorzugt ist auch, dass die Einkoppeloptik einen zweiten Reflektor aufweist, der in den in den ersten Ebenen eine halbkreisförmige Gestalt aufweist, die konzentrisch zur Kreisform des ersten Reflektors ist.

Ferner ist bevorzugt, dass der zweite Reflektor in einem hinteren Abschnitt des Lichtleiters angeordnet ist und einen dachförmigen Querschnitt aufweist, wobei ein Spitzenwinkel zwischen den Reflexionsflächen des Dachkantenreflektors 90° beträgt.

Eine alternativ bevorzugte Einkoppeloptik weist einen linsenartig gestalteten zentralen Bereich und in einem Randbereich Parabel-artige Außenkonturen auf.

Bevorzugt ist auch, dass die erste Umlenkfläche ein Teil einer Grenzfläche des Lichtleiters ist und dass die weiteren Umlenkflächen Teilflächen einer Grenzfläche sind, die der Grenzfläche gegenüber liegt.

Ferner ist bevorzugt, dass die erste Umlenkfläche und die weiteren Umlenkflächen jeweils einen Winkel mit den ersten Ebenen einschließen, der kleiner ist als die Differenz aus einem rechten Winkel und dem Grenzwinkel der internen Totalreflexion. Für einen Grenzwinkel der internen Totalreflexion von 38° ist der Winkel zwischen jeder der Umlenkflächen und den ersten Ebenen daher bevorzugt kleiner als 52° Grad. In einer weiteren bevorzugten Ausgestaltung ist der Winkel jeweils gleich 45°.

Erfindungsgemäß sind die erste Umlenkfläche und die zweiten Umlenkflächen so angeordnet und ausgerichtet, dass das Licht dort jeweils um 90° umgelenkt wird, wobei die Ausrichtung der weiteren Umlenkflächen dadurch determiniert ist, dass der einfallende Strahl, das Lot auf die Umlenkfläche und der reflektierte Strahl in derselben Ebene liegen müssen und die Richtung des reflektierten Strahls die Vorzugsrichtung ist.

Ferner ist bevorzugt, dass eine Linie, längs der die erste Umlenkfläche in einer ersten Ebene ausgerichtet ist, als Führungslinie für die Anordnung der weiteren Umlenkflächen dient.

Bevorzugt ist auch, dass die Führungslinie, längs der die einzelnen ersten und weiteren Umlenkflächen in ihrer Projektion in die erste Ebene angeordnet sind, durch die Abstrahlcharakteristik der Lichtquelle und die Forderung definiert ist, dass die Lichtstärkeverteilung nach der Umlenkung an den weiteren Umlenkflächen homogen ist.

Ferner ist bevorzugt, dass die Führungslinie die Form eines Abschnitts eines Kreisumfangs hat.

Bevorzugt ist auch, dass eine Teilfläche der ersten Umlenkfläche für Licht aus Richtungen mit vergleichsweise geringerer Lichtstärke näher an der Einkoppeloptik angeordnet ist als eine Teilfläche der ersten Umlenkfläche, die zu einem Teilbündel mit vergleichsweise größerer Lichtstärke gehört.

Eine weitere bevorzugte Ausgestaltung zeichnet sich dadurch aus, dass die Führungslinie die Form eines Ausschnitts aus einer Ellipse hat.

Ein weiterer Aspekt der Erfindung betrifft eine Kraftfahrzeugbeleuchtungseinrichtung mit wenigstens einem Lichtleiter. Erfindungsgemäß zeichnet sich eine solche Beleuchtungseinrichtung dadurch aus, dass der Lichtleiter die Merkmale des Anspruchs 1 aufweist.

Dabei ist bevorzugt, dass die Beleuchtungseinrichtung wenigstens zwei Leuchtdioden aufweist, die voneinander verschiedenfarbiges Licht abgeben und die so nahe zueinander benachbart vor einer Lichteintrittsfläche des Lichtleiters angeordnet sind, dass ihr Licht in dasselbe Lichtleitervolumen eingekoppelt wird.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
Figur 1 ein Ausführungsbeispiel eines erfindungsgemäßen Lichtleiters in einem Längsschnitt;
Figur 2 eine Draufsicht auf den Lichtleiter nach Figur 1;
Figur 3 eine Draufsicht auf eine Ausgestaltung eines Lichtleiters 10 mit einer radial inhomogenen Lichtverteilung;
Figur 4 ein Ausführungsbeispiel eines erfindungsgemäßen Lichtleiters mit einer veränderten Einkoppeloptik;
Figur 5 die Einkoppeloptik aus der Figur 4 in einem Querschnitt;
Figur 6 weitere Ausgestaltungen erfindungsgemäßer Lichtleiter, die sich in der Richtung der Lichtauskopplung unterscheiden; und
Figur 7 eine bevorzugte Anwendung eines erfindungsgemäßen Lichtleiters in einer Kraftfahrzeugbeleuchtungseinrichtung.

Gleiche Bezugszeichen in verschiedenen Figuren bezeichnen dabei jeweils gleiche oder zumindest ihrer Funktion nach vergleichbare Elemente.

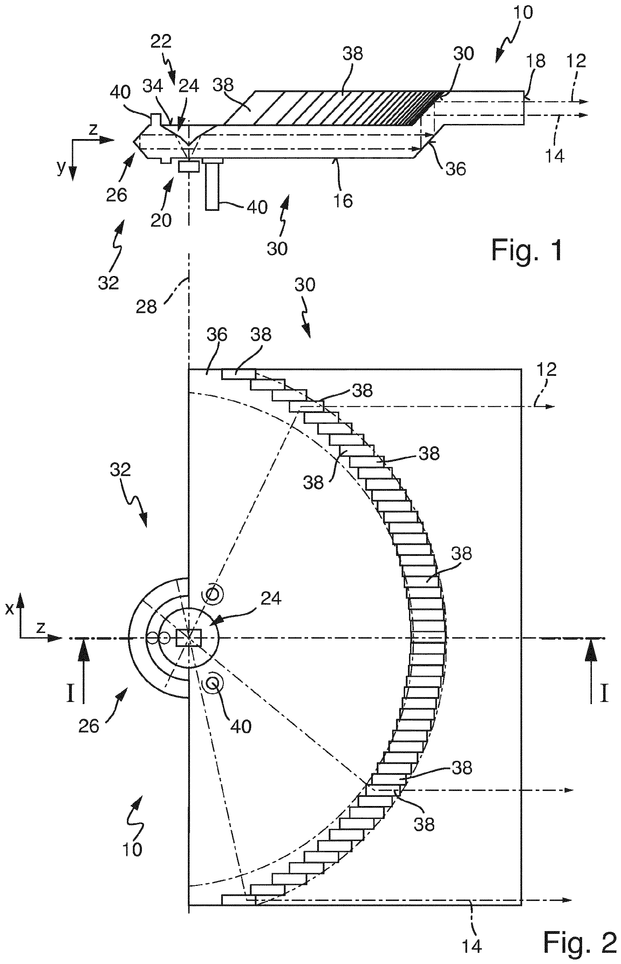

Figur 1 zeigt ein Ausführungsbeispiel eines erfindungsgemäßen Lichtleiters 10 in einem Längsschnitt. Der Schnitt ist so gewählt, dass er exemplarisch komplette Strahlengänge von Licht 12, 14 zwischen einer in einer Grenzfläche 16 des Lichtleiters liegenden Lichteintrittsfläche und einer Lichtaustrittsfläche 18 des Lichtleiters zeigt. In der Figur 1 entspricht die Schnittebene der y-z-Ebene eines rechtshändigen kartesischen Koordinatensystems. Dies ist gleichzeitig eine von vielen zweiten Ebenen im Sinne der vorliegenden Anmeldung.

Figur 2 zeigt eine Draufsicht auf den Lichtleiter 10 nach Figur 1 in seiner kompletten Form, also nicht auf die geschnittene Form. Die Zeichnungsebene der Figur 2 ist gleichzeitig eine erste Ebene im Sinne der vorliegenden Anmeldung oder liegt zumindest parallel dazu.

Beide Figuren zeigen insbesondere eine Anordnung aus einem Lichtleiter 10 und einer Lichtquelle 20. Die Lichtquelle ist so dicht vor einer Lichteintrittsfläche des Lichtleiters angeordnet, dass von ihr ausgehendes Licht als divergentes Lichtbündel in den Lichtleiter eintritt. Die Lichteintrittsfläche ist hier ein der Lichtaustrittsfläche der Lichtquelle zugewandt gegenüber liegender Teil der Grenzfläche 16. Die Lichtquelle ist bevorzugt eine Halbleiterlichtquelle. Die Halbleiterlichtquelle weist eine oder mehrere Leuchtdioden oder Laserdioden auf. Sie besitzt bevorzugt eine näherungsweise ebene Lichtaustrittsfläche. Für Kraftfahrzeugbeleuchtungseinrichtungen werden bevorzugt Halbleiterlichtquellen verwendet, deren Lichtaustrittsflächen eine Kantenlänge von wenigen Zehntelmillimetern bis zu etwa 2 mm besitzen. Die Lichtaustrittsfläche wird in der Regel dicht aber berührungslos vor der Lichteintrittsfläche angeordnet, beispielsweise in einem Abstand in der Größenordnung von einem Zehntelmillimeter. Dadurch wird eine sehr effiziente Lichteinkopplung erzielt, bei der nahezu alles von der Lichtquelle ausgehende Licht in den Lichtleiter einkoppelt.

Der Lichtleiter 10 weist eine Einkoppeloptik 22 auf. Die Einkoppeloptik umfasst hier eine Lichteintrittsfläche, einen ersten Reflektor 24 und einen zweiten Reflektor 26.

Das divergent auf die Einkoppeloptik einfallende Licht ist das von einer Lichtquelle ausgehende Lichtbündel, das über die Lichteintrittsfläche in das Innere des Lichtleiters tritt. In Luft beträgt der gegen das Lot der Lichtaustrittsfläche der Lichtquelle gemessene Öffnungswinkel bei einen LED mit Lambert '-scher Abstrahlungscharakteristik 90°. Dieser Öffnungswinkel verringert sich bei der Einkopplung in das optisch dichtere Lichtleitermaterial auf ca. 42° bei PMMA und 39° bei PC. Wegen der größeren Brechung wird für eine Verwirklichung der Erfindung PC als Lichtleitermaterial bevorzugt. Bei kurzen Brennweiten des rotationssymmetrischen ersten Reflektors 24 kann dieser alle Strahlen des 39°-Kegels durch interne Totalreflexionen in den zweiten Ebenen parallelisieren.

Die erste Ebene ist beim Gegenstand der Figuren 1 und 2 die x-z-Ebene eines rechtshändigen kartesischen Koordinatensystems. Die Zeichnungsebene der Figur 2 entspricht einer solchen zweiten Ebene. Die zweite Ebene ist dann die y-z-Ebene dieses Koordinatensystems. Die zweite Ebene wird daher von einer Normalen der ersten Ebene und einer in der ersten Ebene liegenden Geraden aufgespannt, wobei der Fußpunkt der Normalen ein Punkt der Geraden ist. Die Zeichnungsebene der Figur 1 ist eine solche zweite Ebene.

Der erste Reflektor weist in den zweiten Ebenen bevorzugt die Form einer Parabel auf, deren Brennpunkt im scheinbaren Ursprung des divergenten Lichtbündels der Lichtquelle liegt. Der scheinbare Ursprung entspricht in erster Näherung dem Zentrum der Lichtaustrittsfläche der Lichtquelle. Er unterscheidet sich von diesem Ort jedoch noch geringfügig, da das von der Lichtquelle ausgehende Licht beim Eintritt in den optisch dichteren Lichtleiter zum Lot hin gebrochen wird.

In den zur ersten Ebene parallelen Ebenen weist der erste Reflektor bevorzugt jeweils eine kreisförmige Kontur auf, so dass der erste Reflektor 24 das auf ihn einfallenden Licht in den ersten Ebenen, die hier parallel zur x-z-Ebene liegen, gleichmäßig und damit homogen über die Winkelrichtungen des Vollkreises verteilt.

Im Ergebnis ist die Einkoppeloptik damit dazu eingerichtet, divergent auf sie einfallendes Licht so in das Innere des Lichtleiters einzukoppeln, dass es in den zweiten Ebenen eine geringere Divergenz aufweist als in den ersten Ebenen. In der dargestellten Ausgestaltung breitet sich das Licht in den zweiten Ebenen parallel aus, während es sich in den in den ersten Ebenen radial ausbreitet.

Die starke Verringerung der Divergenz in den zweiten Ebenen ergibt sich durch die Wirkung der Parabelform des ersten Reflektors in den zweiten Ebenen. Im Idealfall ergibt sich in den zweiten Ebenen parallel propagierendes Licht, wie es durch die Strahlengänge 12 und 14, beziehungsweise durch die im Lichtweg hinter der Reflexion am ersten Reflektor 24 liegenden Teile dieser Strahlengänge repräsentiert wird. In den ersten Ebenen ergibt sich durch die homogene Verteilung über die Winkelrichtungen des Vollkreises eine jedenfalls größere Divergenz als in den zweiten Ebenen. Bei einer solchen Verteilung ergibt sich genau genommen keine Verringerung der Divergenz in den ersten Ebenen, da die Winkelverteilung des Lichtes innerhalb der ersten Ebenen durch die Reflexion an den in ersten Ebenen kreisförmigen Konturen des ersten Reflektors nicht verändert wird.

Die strichpunktierte Linie, welche die Figuren 1 und 2 miteinander verbindet, läuft in beiden Figuren durch das Zentrum der Lichtaustrittsfläche der Lichtquelle und stellt damit einen Bezug zwischen diesen beiden Figuren her. Da sie die Lichtaustrittsfläche der bevorzugt als Leuchtdiode verwirklichten Lichtquelle senkrecht durchstößt, wird sie im Folgenden auch als LED-Achse 28 bezeichnet. Bei dem in den Figuren 1 und 2 dargestellten Ausführungsbeispiel trennt die LED-Achse 28 einen der Lichtaustrittsfläche des Lichtleiters zugewandten vorderen Abschnitt oder Halbraum 30 von einem der Lichtaustrittsfläche des Lichtleiters abgewandten hinteren Abschnitte oder Halbraum 32 des Lichtleiters 10.

Der zweite Reflektor 26 ist im hinteren Abschnitt 32 des Lichtleiters angeordnet und wird aufgrund seines in der Figur 1 erkennbaren dachförmigen Querschnitts im Folgenden auch als Dachkantenreflektor bezeichnet. Er weist zwei senkrecht aufeinander stoßende Reflexionsflächen auf. Der Spitzenwinkel zwischen den Reflexionsflächen des Dachkantenreflektors, die in der Figur 1 als Kanten erscheinen, beträgt also 90°. Diesen Querschnitt weist der Dachkantenreflektor in allen zweiten Ebenen auf.

In ersten Ebenen, also zum Beispiel in der Zeichnungsebene der Figur 2, weist der Dachkantenreflektor 26 eine halbkreisförmige Gestalt auf, die über den Halbkreis betrachtet konzentrisch zur Kreisform des ersten Reflektors 24 und damit zur LED-Drehachse 32 ist. Aufgrund dieser speziellen Geometrie reflektiert der Dachkantenreflektor das vom ersten Reflektor her radial einfallende Licht in der gleichen radialen (zweiten) Ebene zurück. Dabei wird das reflektierte Licht in der zweiten Ebene zweimal hintereinander rechtwinklig zu seiner jeweiligen Einfallsrichtung umgelenkt, so dass es zwischen dem ersten Reflektor und der Lichteintrittsfläche hindurch in den vorderen, der Lichtaustrittsfläche des Lichtleiters zugewandten Abschnitt oder Halbraum zurückläuft. Im Ergebnis läuft ein am Dachkantenreflektor reflektierter Strahl innerhalb einer zweiten Ebene parallel versetzt zum innerhalb der zweiten Ebene einfallenden Strahl zurück. In der ersten Ebene besitzt der reflektierte Strahl den gleichen Winkel wie der einfallende Strahl und verläuft daher auf dem gleichen Radius. Dies ist aus den Strahlengängen in Figur 1 ersichtlich. Der Strahlengang 12 repräsentiert vom ersten Reflektor direkt in den ersten Halbraum 30 reflektiertes Licht. Der Strahlengang 14 repräsentiert Licht, das vom ersten Reflektor 24 zunächst in den zweiten Halbraum 32 reflektiert worden ist.

Der erste Reflektor ist dabei als rotationssymmetrische Vertiefung in einer der Lichteintrittsfläche gegenüber liegenden Grenzfläche 34 des Lichtleiters verwirklicht. Die Form entsteht bevorzugt durch Rotation eines Parabelzweiges um die Drehachse 32, die durch das Zentrum der Lichtaustrittsfläche der Lichtquelle und durch den Brennpunkt der Parabel geht. Die Hauptachse der Parabel liegt dabei quer zur Rotationsachse. Die Tiefe der Vertiefung entspricht bevorzugt einem Wert zwischen 40% und 60% des am Ort der Vertiefung herrschenden Abstandes zwischen der Grenzfläche 16, in der die Lichteintrittsfläche liegt und der der Lichteintrittsfläche gegenüberliegenden Grenzfläche 34 des Lichtleiters.

Wenn man den vorderen, der Lichtaustrittsfläche 18 des Lichtleiters zugewandten Halbraum 30 des Lichtleiters noch in ein Lichtquellen-seitiges, unteres Teilvolumen und in ein Reflektorseitiges, oberes Teilvolumen unterteilt führen die beschriebenen Reflexionen letztlich dazu, dass das vom ersten Reflektor zunächst in den hinteren Halbraum reflektierte Licht von dem Dachkantenreflektor so reflektiert wird, dass es im unteren Teilvolumen des vorderen Abschnitts mit der gleichen Winkelverteilung in den ersten Ebenen propagiert wie das im oberen Teilvolumen propagierende Licht, das vom ersten Reflektor direkt in den ersten Halbraum reflektiert worden ist. In Bezug auf zweite Ebenen propagiert das Licht in den beiden Teilvolumina parallel zueinander, wie es durch den parallelen Verlauf der Strahlengänge 12, 14 rechts vom Reflektor 24 in Figur 1 repräsentiert wird.

Über die eine Parallelisierung in den zweiten Ebenen bewirkende Einkoppeloptik hinaus weist der Lichtleiter eine erste Umlenkfläche 36 auf, die eingekoppeltes und auf sie einfallendes Licht umlenkt. Die Umlenkung erfolgt bevorzugt um einen Winkel, der mindestens so groß ist wie das Produkt aus dem Wert des Grenzwinkels der Totalreflexion und dem Faktor 2. In der dargestellten Ausgestaltung ist die erste Umlenkfläche ein Teil der Grenzfläche 16. Weiter weist der Lichtleiter 10 weitere Umlenkflächen 38 auf, die mit von der ersten Umlenkfläche 36 ausgehendem Licht beleuchtet werden und die auf sie von der ersten Umlenkfläche her einfallendes Licht in eine Vorzugsrichtung richten. Die Vorzugsrichtung entspricht in der dargestellten Ausgestaltung der z-Richtung. Die weiteren Umlenkflächen 38 sind in der dargestellten Ausgestaltung jeweils Teilflächen der Grenzfläche 34, die der Grenzfläche 16 gegenüber liegt. Aus beiden Grenzflächen ragen in der dargestellten Ausgestaltung noch Positionierungsstrukturen 40 auf, die alternativ oder ergänzend auch als Vertiefungen verwirklicht sein können.

Die Figuren 1 und 2 und insbesondere die Figur 2 veranschaulichen die parallelisierende Wirkung auf das Licht in den ersten Ebenen. Das in exemplarisch dargestellten Strahlengängen 12 und 14 propagierende Licht wird an der ersten Umlenkfläche 36 jeweils in y-Richtung umgelenkt. Anschließend wird das Licht von weiteren Umlenkflächen 38 in z-Richtung umgelenkt und dadurch auch was seine Ausbreitung in den ersten Ebenen betrifft, parallelisiert.

Die beschriebene Parallelisierung des Lichtbündels, die durch die zweimalige Reflexion um einen Winkel erfolgt, der mindestens so groß ist wie das Produkt aus dem Wert des Grenzwinkels der Totalreflexion und dem Faktor 2, wobei diese Reflexionen an der ersten Umlenkfläche 36 und an jeweils einer der weiteren Umlenkflächen 38 erfolgen, erfordert, dass die einzelnen weiteren Umlenkflächen 38 relativ zueinander und zum jeweils Umlenkflächenindividuell einfallenden Licht in bestimmter Weise angeordnet sind. Die weiteren Umlenkflächen 38 müssen insbesondere gewissermaßen immer in die Vorzugsrichtung schauen. Ihre Lage ist dadurch determiniert, dass der einfallende Strahl, das Lot auf die Umlenkfläche und der reflektierte Strahl in derselben Ebene liegen müssen und die Richtung des reflektierten Strahls und die Richtung des einfallenden Strahls feststehen. Die Linie, längs der die erste Umlenkfläche 36 in einer ersten Ebene ausgerichtet ist, dient als Führungslinie für die Anordnung der weiteren Umlenkflächen 38. Durch die beschriebene zweimalige Umlenkung wird aus dem in einer Ebene radial divergenten Lichtbündel ein in sich parallel ausgerichteter und homogener Lichtstrom erzeugt. In einer bevorzugten Ausgestaltung erfolgt die Umlenkung jeweils um 90°.

Analog lässt sich in drei Dimensionen eine räumliche Kugelabstrahlung mit drei Umlenkungen um jeweils 90° in ein solches in sich parallel ausgerichtetes und homogenes Lichtbündel umwandeln.

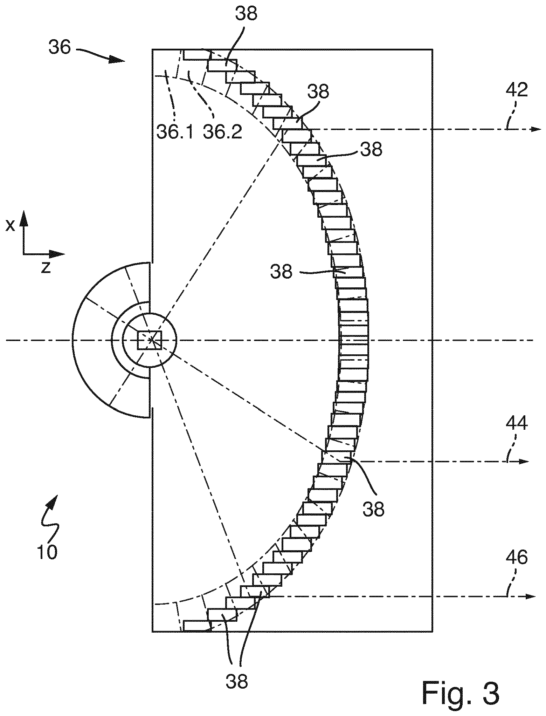

Beim Gegenstand der Figuren 1 und 2 hat sich auf Grund der gleichmäßigen Verteilung des Lichts über die Winkel eine radiale Lichtausbreitung ein Abschnitt eines Kreisumfangs als Führungslinie für die Anordnung der ersten Umlenkflächen und der weiteren Umlenkflächen ergeben. Figur 3 zeigt eine Draufsicht auf eine Ausgestaltung eines Lichtleiters 10. Bei dieser Ausgestaltung soll die Länge der Strahlen 42, 44, 46 ein Maß für die Lichtstärke eines Teilbündels sein, das diesen Strahl enthält. In dem dargestellten Beispiel ist die Lichtstärke außen (Strahlen 42, 46) also insbesondere größer als innen (Strahl 44). Dies ist ein Beispiel einer elliptischen Lichtverteilung: Die Lichtverteilung des von der Einkoppeloptik ausgehenden Lichtes ist in z-Richtung weniger groß als in X-Richtung.

Bei einer solchen inhomogenen Lichtstärkeverteilung ist bevorzugt, dass die erste Umlenkfläche 36, die sich auch aus einzelnen Teilflächen 36.1, 36.2, .... zusammensetzen kann, entlang einer elliptischen Führungslinie angeordnet sind. Für Richtungen 44 mit vergleichsweise geringerer Lichtstärke ist die zugehörige Teilfläche der ersten Umlenkflächen näher an der Einkoppeloptik angeordnet als eine Teilfläche der ersten Umlenkfläche, die zu einem Teilbündel mit vergleichsweise größerer Lichtstärke gehört. Die weiteren Umlenkflächen 38 sind natürlich auch hier so angeordnet, dass sie von dem Licht beleuchtet werden, das von der ersten Umlenkfläche ausgeht. Sie sind für die beschriebene Umlenkung also ebenfalls längs einer elliptischen Führungsbahn angeordnet. Bei Licht, das parallel zur ersten Ebenen auf die erste Umlenkfläche 36 einfällt und das parallel zu ersten Ebenen von den weiteren Umlenkflächen 38 reflektiert wird, schließen die erste Umlenkfläche und die weiteren Umlenkflächen jeweils einen Winkel mit den ersten Ebenen ein, der höchstens so groß ist wie der Wert der Differenz aus einem rechten Winkel und dem Grenzwinkel der Totalreflexion. Dieser maximale Wert ergibt sich gerade dann, wenn die Umlenkung an der Umlenkfläche um einen Winkel erfolgt, der doppelt so groß ist wie der Grenzwinkel der Totalreflexion.

Die Führungslinie, längs der die einzelnen ersten und weiteren Umlenkflächen in ihrer Projektion in die erste Ebene angeordnet sind, wird letztlich durch die Abstrahlcharakteristik der Lichtquelle und die Forderung definiert, dass die Lichtstärkeverteilung nach der Umlenkung an der ersten Umlenkflächen und den weiteren Umlenkflächen homogen sein soll.

Die Ebene, in der die jeweilige Umlenkung stattfindet, ist immer dadurch definiert, dass ihr Lot, der einfallende Strahl und der reflektierte Strahl in einer Ebene liegen. Die Umlenkebene der ersten Umlenkfläche wird daher insbesondere durch den einfallenden, radialen Strahl und die y-Richtung definiert, da die y-Richtung die Richtung des an der ersten Umlenkfläche reflektierten Strahls definiert. Die Umlenkfläche der zweiten Umlenkfläche wird durch die y-Richtung und die z-Richtung definiert, da die y-Richtung die Richtung des einfallenden Strahls angibt und die z-Richtung die Richtung des reflektierten Strahls angibt.

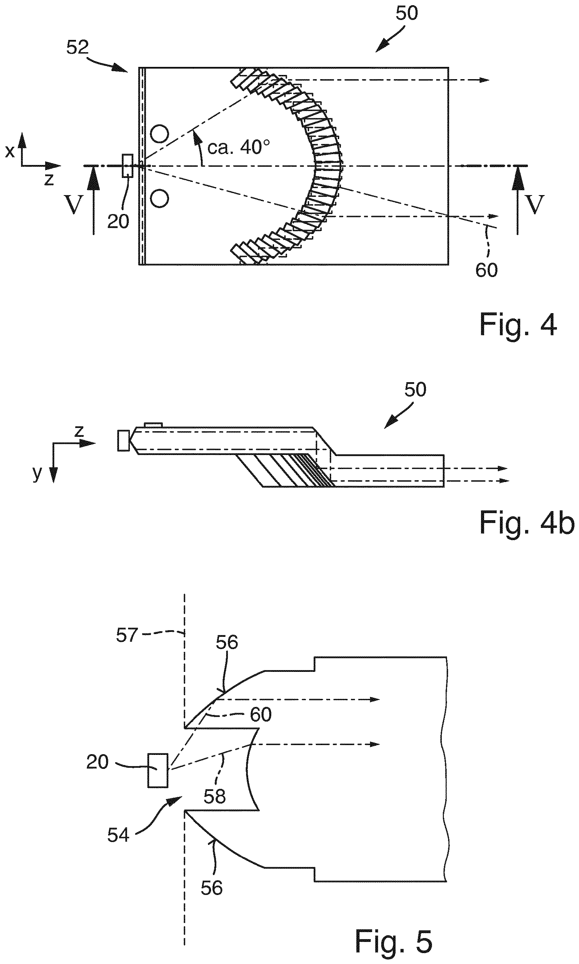

Figur 4 zeigt eine Draufsicht auf ein weiteres Ausführungsbeispiel eines erfindungsgemäßen Lichtleiters 50. Auch hier liegt die sichtbare Ebene parallel zu einer ersten Ebene im Sinne der vorhergehenden Beschreibung. Dieses Ausführungsbeispiel unterscheidet sich vom vorher beschriebenen Ausführungsbeispiel zunächst durch eine abweichende Einkoppeloptik. Die Lichtquelle 20 ist beim Gegenstand der Figur 4 dicht vor einer Schmalseite 52 des ansonsten flächigen Lichtleiters angeordnet.

Mit der abweichenden Einkoppeloptik geht auch eine abweichende Lichtstärkeverteilung des zwischen der Einkoppeloptik und der ersten Umlenkfläche propagierenden Lichtes einher.

In der Figur 4 besitzt das eingekoppelte Licht einen Öffnungswinkel von ca. 40° zum Lot auf die Eintrittsfläche, wobei der genaue Wert des Öffnungswinkels vom Brechungsindex des Lichtleitermaterials abhängig ist.

Auch innerhalb des Öffnungswinkels ist das Licht bei dieser Art der Einkopplung nicht homogen über die Öffnungswinkelbreite verteilt. Vielmehr tritt hier in der zentralen Hauptabstrahlrichtung des Bündels ein Lichtstärkemaximum auf, an das sich ein leichter Abfall der Lichtstromstärke zu den Rändern des Lichtbündels hin anschließt. Wie vorhergehend beschrieben worden ist, sind die ersten Umlenkflächen dann bevorzugt längs einer Führungslinie angeordnet, die sich als Bild der inhomogenen Lichtstärkeverteilung des eingekoppelten Lichtes ergibt. Dabei sind insbesondere Teilflächen der ersten Umlenkfläche für Teilbündel, die vergleichsweise große Lichtstromstärken aufweisen, weiter vom Zentrum der Lichteinkopplung entfernt angeordnet als Teilflächen der ersten Umlenkfläche für Teilbündel, die vergleichsweise geringere Lichtstromstärken aufweisen.

In der Figur 4 sind also insbesondere zentrale Teilflächen der ersten Umlenkfläche weiter von der Lichtquelle entfernt angeordnet als die weiter außen liegenden Teilflächen der ersten Umlenkfläche. Die Teilflächen der ersten Umlenkflächen sind dabei jeweils die mit durchgezogenen Linien dargestellten Teilflächen, während die weiteren Umlenkflächen dort in gestrichelter Form dargestellt sind. Es ergibt sich also eine von der Kreisbogenform abweichende Führungslinie 60. In Richtungen mit größerer Lichtstromdichte werden die für die zweite Parallelisierung verwendeten Umlenkflächen weiter von der Einkoppeloptik weg angeordnet als in Richtungen mit geringerer Lichtstromdichte. Bei für die verschiedenen Einfallsrichtungen gleicher Größe der in die gemeinsame Vorzugsrichtung reflektierenden weiteren Umlenkflächen ergibt sich dadurch eine Kompensation der Lichtstromdichteunterschiede. Die zweite Parallelisierung erlaubt also insbesondere zusätzlich eine Homogenisierung der Lichtstromdichte des parallelisierten Lichtes.

An der Lichtaustrittsfläche (Bezugszeichen 18 in Figur 1) kann man, wie üblich, Zylinder, Kissen, Prismen oder andere Freiformflächen implementieren, um eine gewünschte winkelabhängige Lichtverteilung zu bekommen. Damit lässt sich zum Beispiel eine für Signallicht-Lichtverteilungen von Kraftfahrzeugleuchten regelkonforme Lichtverteilung aus einer bandförmig und homogen hell leuchtend erscheinenden Lichtaustrittsfläche 18 gewinnen.

Figur 4b zeigt einen Querschnitt durch das Ausführungsbeispiel der Figur 4. Ein Vergleich der Figuren 1 und 4b zeigt, dass die Übereinanderanordnung von ersten Umlenkflächen und weiteren Umlenkflächen aus der Figur 1 beim Gegenstand der Figur 4b gerade umgekehrt ist. Die beschriebene Funktion ist nicht von dieser Anordnung abhängig.

Figur 5 zeigt die Einkoppeloptik des Lichtleiters 50 aus der Figur 4 in einem Querschnitt, der parallel zu einer zweiten Ebene im Sinne der vorhergehenden Beschreibung liegt. Die Einkoppeloptik weist einen linsenartig gestalteten zentralen Bereich 54 und in seinem Randbereich parabel-artige Außenkonturen 56 auf. Der linsenartig ausgestaltete zentrale Bereich ist so ausgestaltet, dass über ihn eintretendes Licht 58 durch Brechung parallelisiert wird. Die Randbereiche sind so gestaltet, dass sie von über die Innenflächen des Einkoppelbereichs eingetretenes Licht 60 durch interne Totalreflexionen parallelisieren. Die Einkoppeloptik ergibt sich in drei Dimensionen durch Rotieren des in der Fig. 5 dargestellten Querschnitts um die Achse 57 herum um einen Winkel von 180°Insgesamt wird durch diese Einkoppeloptik erreicht, dass sich das Licht in der Zeichnungsebene der Figur 5, die einer zweiten Ebene im Sinne des bis hier Beschriebenen entspricht, parallel ausbreitet.

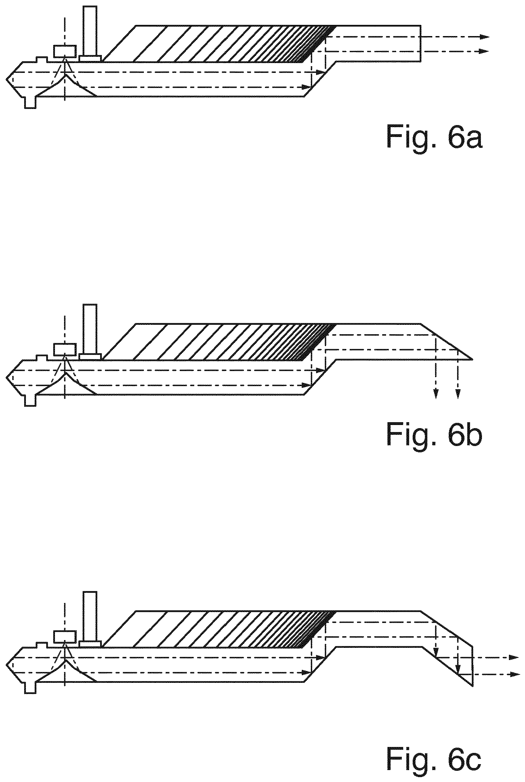

Die Figuren 6a, 6b und 6c zeigen weitere Ausgestaltungen eines Lichtleiters. Diese Figuren verdeutlichen, dass die Einkoppeloptik der Figur 1 mit der Lichtquelle auch an der x-z-Ebene gespiegelt im sonst unveränderten Lichtleiter 10 der Figur 1 angeordnet sein kann. Figur 6b veranschaulicht, dass das Licht bei der Auskopplung noch eine Umlenkung erfahren kann. Figur 6c zeigt, dass das Licht vor der Auskopplung alternativ oder ergänzend noch einen parallelen Versatz erhalten kann. Die dafür erforderlichen Umlenkungen erfolgen bei den Gegenständen der Figur 6 durch schräg zum einfallenden Licht angeordnete ebene Spiegelflächen. Da diese die Winkelverteilung des einfallenden Lichtes bei der Reflexion nicht verändern, bleibt die bis dahin erzielte Parallelität und Homogenität dabei erhalten.

Der Lichtleiter kann insbesondere in den Teilen, die im Lichtweg zwischen den weiteren Umlenkflächen liegen, auch einen im Raum gekrümmten Verlauf aufweisen.

In bevorzugten Ausgestaltungen ist die Länge der Lichtaustrittsfläche 14 jeweils größer als deren vierfache Breite, insbesondere größer als deren sechsfache Breite und besonders bevorzugt, größer als deren achtfache Breite. Diese Angaben beziehen sich dabei jeweils auf ein Lichtleitervolumen, das von einer Lichtquelle, sei es eine einzelne Halbleiterlichtquelle oder eine räumlich zusammengefasste Anordnung mehrerer Halbleiterlichtquellen mit Licht gespeist wird. Die Figuren 1 bis 6 stellen Ausgestaltungen solcher Lichtleiter dar.

Sofern mehrere räumlich voneinander getrennte Lichtquellen verwendet werden, wird ein Lichtleitervolumen jeder Lichtquelle zugeordnet, wobei eine solche Anordnung als Elementarzelle betrachtet wird. In einem solchen Fall ist bevorzugt, dass die oben angegebenen Verhältnisse für jede Elementarzelle gelten. Pro Elementarzelle können auch zwei Leuchtdioden, die voneinander verschiedenfarbiges Licht abgeben, so nahe benachbart angeordnet werden, dass ihr Licht in dasselbe Lichtleitervolumen eingekoppelt wird. Je nachdem, welche der beiden Leuchtdioden eingeschaltet wird, lassen sich damit verschiedene Lichtfunktionen wie Tagfahrlicht, Positionslicht und/oder Blinklicht erfüllen. Bei Heckleuchten könnten auch drei Leuchtdioden in diesem Sinne angeordnet werden, von denen eine weißes, eine rotes und eine gelbes Licht abgibt.

Ausgestaltungen der Erfindung weisen Lichtleiter auf, die aus mehreren Lichtleitern der in den Figuren 1 - 6 zusammengesetzt sind. So können zum Beispiel mehrere solche Lichtleiter als Elementarzellen eines größeren Lichtleiters in x-Richtung nebeneinander angeordnet sein, wodurch eine besonders lange und schmale leuchtende Lichtaustrittsfläche gebildet werden kann.

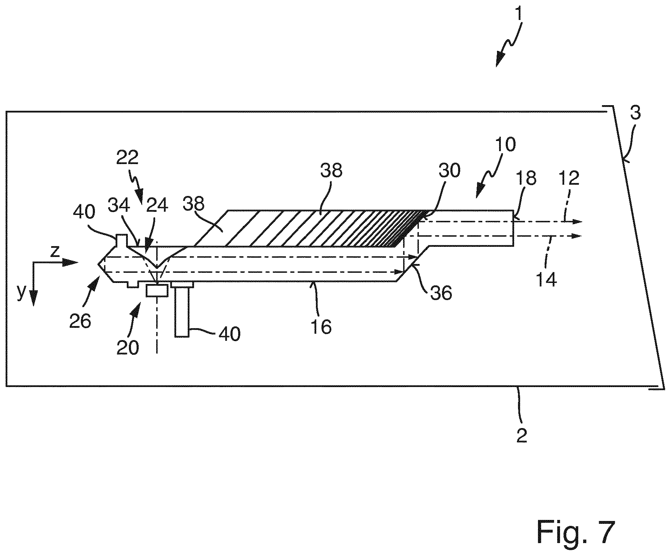

Figur 7 zeigt im Einzelnen eine bevorzugte Anwendung eines erfindungsgemäßen Lichtleiters in einer Kraftfahrzeugbeleuchtungseinrichtung 1 in einer Schnittdarstellung. Die Kraftfahrzeugbeleuchtungseinrichtung 1 weist einen Lichtleiter 10 mit den Merkmalen der Erfindung auf. In der Fig. 2 entspricht der Lichtleiter dem Lichtleiter 10 aus der Fig. 1, ohne dass dies als Beschränkung auf einen solchen Lichtleiter verstanden werden soll. Mit Bezug auf die im Zusammenhang mit der Figur 1 angegebenen Richtungen liegt die Schnittebene der Figur 2 in einer y-z-Ebene des Lichtleiters 10. Die Kraftfahrzeugbeleuchtungseinrichtung 18 weist ein Gehäuse 2 mit einer Lichtaustrittsöffnung auf, die von einer transparenten Abdeckscheibe 3 abgedeckt wird. Die Lichtaustrittsfläche des Lichtleiters ist der Abdeckscheibe zugewandt.

Moderne Kraftfahrzeugbeleuchtungseinrichtungen liefern Signallicht-Lichtverteilungen und/oder Scheinwerfer-Lichtverteilungen. Eine Signallicht-Lichtverteilung dient dazu, anderen Verkehrsteilnehmern die Anwesenheit eines Kraftfahrzeugs und/oder die Absichten seines Fahrers anzuzeigen. Scheinwerfer-Lichtverteilungen sollen dagegen Objekte im Fahrweg des Kraftfahrzeuges beleuchten und damit für den Fahrer wahrnehmbar machen. Das Erzeugen einer Lichtverteilung wird auch als Lichtfunktion bezeichnet. Häufig erfüllt eine Beleuchtungseinrichtung mehrere Lichtfunktionen mit Hilfe von einem oder mehreren Lichtmodulen, die in einer solchen Beleuchtungseinrichtung angeordnet sind. Bei Scheinwerfern, die eine der Kontur des pfeilförmigen Fahrzeugbugs aufweisende Pfeilung aufweisen, erfolgt die Anordnung der Lichtleitervorrichtung bevorzugt schräg. Eine Kompensation einer dann unerwünschten Brechung erfolgt bevorzugt durch eine geeignete Drehung der Einkoppeleinheit oder durch eine gestufte Ausführung der Lichtaustrittsfläche.

Die hier vorgestellte Erfindung dient bevorzugt zur Erfüllung von Signallichtfunktionen, zum Beispiel von Tagfahrlicht-Lichtfunktionen oder Blinklicht-Lichtfunktionen. Dabei spielt es keine Rolle, ob erfindungsgemäße Beleuchtungseinrichtungen neben einer durch die Erfindung erfüllten Lichtfunktion noch weitere Lichtfunktionen erfüllen.

Eine Beleuchtungseinrichtung, die einen der hier beschriebenen Lichtleiter aufweist, wird ebenfalls als Erfindung betrachtet. Ausgestaltungen erfindungsgemäßer Beleuchtungseinrichtungen können insbesondere separate Bugleuchten für Blinklicht- oder Tagfahrlicht-Lichtfunktionen sein, oder es kann sich um mehrere Lichtfunktionen erfüllende Frontscheinwerfer oder auch Heckleuchten handeln.

Erfindungsgemäß zeichnet sich eine solche Beleuchtungseinrichtung dadurch aus, dass sie einen Lichtleiter mit den Merkmales des Anspruchs 1 aufweist.

Dabei ist bevorzugt, dass die Beleuchtungseinrichtung wenigstens zwei Leuchtdioden aufweist, die voneinander verschiedenfarbiges Licht abgeben und die so nahe zueinander benachbart vor einer Lichteintrittsfläche des Lichtleiters angeordnet sind, dass ihr Licht in dasselbe Lichtleitervolumen eingekoppelt wird. Damit können durch alternatives Einschalten der einen oder einer anderen Leuchtdiode verschiedene Lichtfunktionen mit derselben Lichtleiterstruktur verwirklicht werden.

## Patentansprüche

1. Lichtleiter (10) mit einer Einkoppeloptik (24, 26), die dazu eingerichtet ist, divergent auf sie einfallendes Licht so in das Innere des Lichtleiters einzukoppeln, dass sich das eingekoppelte Licht (12, 14) im Inneren des Lichtleiters in zu einer ersten Ebene parallelen Ebenen und in zweiten Ebenen ausbreitet, wobei jede zweite Ebene von einer Normalen der ersten Ebene und einer in der ersten Ebene liegenden Geraden aufgespannt wird, und mit einer Lichtaustrittsfläche (18), wobei die Einkoppeloptik dazu eingerichtet ist, das Licht so einzukoppeln, dass es in den zweiten Ebenen eine geringere Divergenz aufweist als in den ersten Ebenen und dass der Lichtleiter eine zwischen der Einkoppeloptik und der Lichtaustrittsfläche (18) liegende erste Umlenkfläche (36) aufweist, die von der Einkoppeloptik ausgehendes und auf die erste Umlenkfläche einfallendes Licht um einen Winkel umlenkt, der mindestens so groß ist wie das Produkt aus dem Wert des Grenzwinkels der Totalreflexion und dem Faktor 2, **dadurch gekennzeichnet, dass** die erste Umlenkfläche so ausgestaltet ist, dass das auf die erste Umlenkfläche einfallende Licht in Richtung der Normalen der ersten Ebene umgelenkt wird, und wobei der Lichtleiter weitere Umlenkflächen (38) aufweist, die mit von der ersten Umlenkfläche ausgehendem Licht beleuchtet werden und die auf sie von der ersten Umlenkfläche her einfallendes Licht in eine für die weiteren Umlenkflächen gemeinsame Vorzugsrichtung (z) richten, wobei die erste Umlenkfläche und die zweiten Umlenkflächen so angeordnet und ausgerichtet sind, dass das Licht dort jeweils um 90° umgelenkt wird, wobei die Ausrichtung der weiteren Umlenkflächen dadurch determiniert ist, dass der einfallende Strahl, das Lot auf die Umlenkfläche und der reflektierte Strahl in derselben Ebene liegen müssen und die Richtung des reflektierten Strahls die Vorzugsrichtung ist.

2. Lichtleiter (10) nach Anspruch 1, **dadurch gekennzeichnet, dass** ein erster Reflektor in den zweiten Ebenen die Form einer Parabel aufweist, deren Brennpunkt im scheinbaren Ursprung des divergenten Lichtbündels der Lichtquelle liegt.

3. Lichtleiter (10) nach Anspruch 2, **dadurch gekennzeichnet, dass** der erste Reflektor als rotationssymmetrische Vertiefung in einer der Lichteintrittsfläche gegenüber liegenden Grenzfläche (34) des Lichtleiters verwirklicht ist.

4. Lichtleiter (10) nach Anspruch 3, **dadurch gekennzeichnet, dass** die Tiefe der Vertiefung einem Wert zwischen 40% und 60% des am Ort der Vertiefung bei nicht vorhandener Vertiefung herrschenden Abstandes zwischen der Grenzfläche 16, in der die Lichteintrittsfläche liegt und der der Lichteintrittsfläche gegenüberliegenden Grenzfläche 34 des Lichtleiters entspricht.

5. Lichtleiter (10) nach einem der Ansprüche 2 bis 4, **dadurch gekennzeichnet, dass** ein zweiter Reflektor in den ersten Ebenen eine halbkreisförmige Gestalt aufweist, die konzentrisch zur Kreisform des ersten Reflektors (24) ist.

6. Lichtleiter (10) nach Anspruch 5, , **dadurch gekennzeichnet, dass** der zweite Reflektor 26 in einem hinteren Abschnitt (32) des Lichtleiters angeordnet ist und einen dachförmigen Querschnitt aufweist.

7. Lichtleiter (50)nach Anspruch 1, **dadurch gekennzeichnet, dass** die Einkoppeloptik einen linsenartig gestalteten zentralen Bereich (54) und in einem Randbereich Parabel-artige Außenkonturen (56) aufweist.

8. Lichtleiter (10; 50) nach einem der vorhergehenden Ansprüche, **dadurch gekennzeichnet, dass** die erste Umlenkfläche ein Teil einer Grenzfläche (16) des Lichtleiters ist und dass die weiteren Umlenkflächen (38) Teilflächen einer Grenzfläche (34) sind, die der Grenzfläche (16) gegenüber liegt.

9. Lichtleiter (10; 50) nach einem der vorhergehenden Ansprüche, **dadurch gekennzeichnet, dass** die erste Umlenkfläche und die weiteren Umlenkflächen jeweils einen Winkel mit den ersten Ebenen einschließen.

10. Lichtleiter (10; 50) nach einem der vorhergehende Ansprüche, **dadurch gekennzeichnet, dass** eine Linie, längs der die erste Umlenkfläche (36) in einer ersten Ebene ausgerichtet ist, als Führungslinie (60) für die Anordnung der weiteren Umlenkflächen (38) dient.

11. Lichtleiter (10; 50) nach Anspruch 1, **dadurch gekennzeichnet, dass** die Führungslinie (60), längs der die einzelnen ersten und weiteren Umlenkflächen in ihrer Projektion in die erste Ebene angeordnet sind, durch die Abstrahlcharakteristik der Lichtquelle und die Forderung definiert ist, dass die Lichtstärkeverteilung nach der Umlenkung an den weiteren Umlenkflächen homogen ist.

12. Lichtleiter (10; 50) nach Anspruch 1, **dadurch gekennzeichnet, dass** die Führungslinie (60) die Form eines Abschnitts eines Kreisumfangs hat.

13. Lichtleiter (10; 50) nach einem der Ansprüche 10 und 11, **dadurch gekennzeichnet, dass** eine Teilfläche der ersten Umlenkfläche (36) für Licht aus Richtungen (44) mit vergleichsweise geringerer Lichtstärke näher an der Einkoppeloptik angeordnet ist als eine Teilfläche der ersten Umlenkfläche, die zu einem Teilbündel mit vergleichsweise größerer Lichtstärke gehört.

14. Lichtleiter (10; 50) nach Anspruch 13, **dadurch gekennzeichnet, dass** die Führungslinie (60) die Form eines Ausschnitts aus einer Ellipse hat.

## Claims

1. A light conductor (10) with an input coupler (24, 26) which is designed in such a way that divergent incident light is coupled into the inside of the light conductor in such a way that the coupled in light (12, 14) inside of the light conductor is distributed in layers that are parallel to a first layer and in second layers, wherein each second layer is spanned by a perpendicular of the first layer and by a straight line located in the first layer, and with a light emitting area (18), wherein the input coupler is designed so that light is coupled in such a way that it has a lower divergence in the second layers than in the first layers and that the light conductor comprises a first deflection area lying between the input coupler and the light emitting area (18), which redirects light emitted from the input coupler incident on the deflection area (36) by an angle which is at least as big as the product of the value of the critical angle of the total internal reflection and the factor 2, **characterised in that** the first deflection area is designed such that light that is incident on the first deflection area is redirected into the direction of the perpendicular to the first layer, and wherein the light conductor comprises further deflection areas (38) which are illuminated with light emitted from the first deflection area and which direct the incident light from the first deflection area into a preferred common direction (z) for the further deflection areas, wherein in the first deflection area and the second deflection areas are positioned and aligned in such a way that the light is there deflected by 90° respectively, whereby the alignment of the further deflection areas is determined in such a way that the incident ray, the perpendicular to the deflection area and the reflected ray have to be in the same layer and that the direction of the reflected ray is the preferred direction.

2. A light conductor (10) according to claim 1, **characterized in that** a first reflector in the second layers is made in the shape of a parabola, whose focal point is in the apparent origin of the divergent light beam of the light source.

3. A light conductor (10) according to claim 2, **characterized in that** the first reflector is realized as a rotationally symmetric deepening in a boundary area (34) opposite of the light incidence area of the light conductor.

4. A light conductor (10) according to claim 3, **characterized in that** the depth of the deepening corresponds to a value between 40% and 60% of the distance between the boundary area (16) in which the light incidence area is located and the boundary area (34) opposite of the light incidence area of the light conductor and where the deepening is located, which distance would be present if there were no deepening.

5. A light conductor (10) according to one of claims 2 to 4, **characterized in that** a second reflector in the first layers features a semicircular form which is concentrically to the circular shape of the first reflector (24).

6. A light conductor (10) according in claim 5, **characterized in that** the second reflector (26) is positioned in a rear section (32) of the light conductor and features a roof-shaped cross section.

7. A light conductor (50) according to claim 1, **characterized in that** the input coupler comprises a lens-shaped central area (54) and comprises, in a border area, parabolic external contours (56).

8. A light conductor (10; 50) according to one of the preceding claims, **characterized in that** the first deflection area is part of a boundary area (16) of the light conductor and the further deflection areas (38) are partial sections of a boundary area (34) which is opposite of that boundary area (16).

9. A light conductor (10; 50) according to one of the preceding claims, **characterized in that** the first deflection area and the additional deflection areas each enclose an angle with the first layers.

10. A light conductor (10; 50) according to any of the preceding claims, **characterized in that** a line along which the first deflection area (36) is aligned in a first layer, serves as a guiding line (60) for aligning further deflection areas (38).

11. A light conductor (10; 50) according to claim 1, **characterized in that** the guiding line (60), along which the individual first and additional deflection areas are arranged in their projections in the first layer, is defined by the radiation characteristics of the light source and the requirement that the light intensity distribution after the deflection in the additional deflection areas be homogeneous.

12. A light conductor (10; 50) according to claim 1, **characterized in that** the guiding line (60) has the shape of a section of a circumference.

13. A light conductor (10; 50) according to claim 10 and 11, **characterized in that** a section of the first deflection area (36) for light from directions (44) with comparatively lower light intensity is arranged closer to the input coupler than a section of the first deflection area that belongs to a partial beam with comparatively higher light intensity.

14. A light conductor (10; 50) according to in claim 13, **characterized in that** the guiding line (60) is in the shape of a section of an ellipse.

## Revendications

1. Guide de lumière (10) avec une optique de couplage (24, 26), qui est conçue pour coupler de la lumière incidente de manière divergente sur celle-ci, vers l'intérieur du guide de lumière, de telle sorte que la lumière couplée (12, 14) se propage à l'intérieur du guide de lumière dans des plans parallèles à un premier plan et dans des seconds plans, chaque second plan étant délimité par une normale au premier plan et une ligne droite s'étendant dans le premier plan, et avec une surface de sortie de lumière (18), l'optique de couplage étant conçue pour coupler la lumière de telle sorte qu'elle présente une divergence plus faible dans les seconds plans que dans les premiers plans et que le guide de lumière présente une première surface de déviation (36) située entre l'optique de couplage et la surface de sortie de lumière (18), qui dévie de la lumière émanant de l'optique de couplage et incidente sur la première surface de déviation, selon un angle qui est au moins aussi grand que le produit de la valeur de l'angle limite de la réflexion totale et du facteur 2, **caractérisé en ce que** la première surface de déviation est agencée de telle sorte que la lumière incidente sur la première surface de déviation est déviée dans la direction de la normale au premier plan, et le guide de lumière présentant des surfaces de déviation (38) supplémentaires, qui sont éclairées avec de la lumière émanant de la première surface de déviation et qui dirigent la lumière incidente sur celles-ci en provenance la première surface de déviation, dans une direction préférée (z) commune aux surfaces de déviation supplémentaires, la première surface de déviation et les secondes surfaces de déviation étant disposées et orientées de telle sorte que la lumière y est déviée dans chaque cas de 90°, l'orientation des surfaces de déviation supplémentaires étant déterminée par le fait que le faisceau incident, la normale sur la surface de déviation et le faisceau réfléchi doivent se trouver dans le même plan et que la direction du faisceau réfléchi est la direction préférée.

2. Guide de lumière (10) selon la revendication 1, **caractérisé en ce qu'**un premier réflecteur dans les seconds plans a la forme d'une parabole dont le point focal se situe dans l'origine apparente du faisceau de lumière divergent de la source lumineuse.

3. Guide de lumière (10) selon la revendication 2, **caractérisé en ce que** le premier réflecteur est réalisé sous la forme d'une cavité à symétrie de révolution dans une interface (34) du guide de lumière opposée à la surface d'entrée de lumière.

4. Guide de lumière (10) selon la revendication 3, **caractérisé en ce que** la profondeur de la cavité correspond à une valeur comprise entre 40% et 60% de la distance qui, en l'absence de cavité, prévaut à l'endroit de la cavité entre l'interface (16), où se trouve la surface d'entrée de lumière, et l'interface (34) du guide de lumière opposée à la surface d'entrée de lumière.

5. Guide de lumière (10) selon l'une quelconque des revendications 2 à 4, **caractérisé en ce qu'**un second réflecteur dans les premiers plans présente une forme semi-circulaire, qui est concentrique à la forme circulaire du premier réflecteur (24).

6. Guide de lumière (10) selon la revendication 5, **caractérisé en ce que** le second réflecteur (26) est disposé dans un tronçon arrière (32) du guide de lumière et présente une section transversale en forme de toit.

7. Guide de lumière (50) selon la revendication 1, **caractérisé en ce que** l'optique de couplage comprend une zone centrale (54) configurée en forme de lentille et des contours extérieurs de type parabolique (56) dans une zone de bord.

8. Guide de lumière (10; 50) selon l'une quelconque des revendications précédentes, **caractérisé en ce que** la première surface de déviation fait partie d'une interface (16) du guide de lumière, et **en ce que** les surfaces de déviation supplémentaires (38) sont des surfaces partielles d'une interface (34), qui est en regard de l'interface (16).

9. Guide de lumière (10; 50) selon l'une quelconque des revendications précédentes, **caractérisé en ce que** la première surface de déviation et les surfaces de déviation supplémentaires forment chacune un angle avec les premiers plans.

10. Guide de lumière (10; 50) selon l'une des revendications précédentes, **caractérisé en ce qu'**une ligne le long de laquelle la première surface de déviation (36) est alignée dans un premier plan sert de ligne de guidage (60) pour l'agencement des surfaces de déviation supplémentaires (38).

11. Guide de lumière (10; 50) selon la revendication 1, **caractérisé en ce que** la ligne de guidage (60) le long de laquelle la première surface de déviation et les surfaces de déviation supplémentaires sont disposées dans leur projection dans le premier plan est définie par les caractéristiques d'émission de la source de lumière et l'exigence que la répartition de l'intensité lumineuse après la déviation sur les surfaces de déviation supplémentaires soit homogène.

12. Guide de lumière (10; 50) selon la revendication 1, **caractérisé en ce que** la ligne de guidage (60) a la forme d'un tronçon d'une circonférence.

13. Guide de lumière (10; 50) selon l'une quelconque des revendications 10 et 11, **caractérisé en ce que**, pour de la lumière provenant de directions (44) avec une intensité lumineuse comparativement plus faible, une surface partielle de la première surface de déviation (36) est disposée plus près de l'optique de couplage qu'une surface partielle de la première surface de déviation qui est associée à un faisceau partiel avec une intensité lumineuse comparativement plus élevée.

14. Guide de lumière (10; 50) selon la revendication 13, **caractérisé en ce que** la ligne de guidage (60) a la forme d'une partie d'une ellipse.
